# EUROPÄISCHE PATENTSCHRIFT

(11) **EP 4 445 478 B1**
(45) Veröffentlichungstag und Bekanntmachung des Hinweises auf die Patenterteilung: **09.09.2026**
(21) Anmeldenummer: 23822249.1
(22) Anmeldetag: 05.12.2023
(51) Int. Cl.: H02K 3/14, H02K 15/04

(54) **BANDLEITERVORRICHTUNG FÜR EINE ELEKTRISCHE MASCHINE**
STRAP CONDUCTOR DEVICE FOR AN ELECTRICAL MACHINE
CONDUCTEUR RUBAN POUR UNE MACHINE ELECTRIQUE

(30) Priorität: 05.12.2022 DE 102022132247
(43) Veröffentlichungstag der Anmeldung: 16.10.2024
(60) Teilanmeldung: 26196849.9
(73) Patentinhaber: Additive | Drives GmbH, 01189 Dresden (DE)
(72) Erfinder: HELM, Axel, 01189 Dresden (DE)
(74) Vertreter: Meissner Bolte Partnerschaft mbB
(86) Internationale Anmeldenummer: PCT/EP2023/084214
(87) Internationale Veröffentlichungsnummer: WO 2024/121095

(56) Entgegenhaltungen:
- DE-C- 472 405
- GB-A- 2 603 537
- IT-A1- BO20 090 262
- US-A1- 2015 114 676

## Beschreibung

Die Erfindung betrifft eine Bandleitervorrichtung, ausgebildet, um in Wechselstrom gespeiste elektrische Maschinen, insbesondere Motoren, eingesetzt zu werden, aufweisend mindestens zwei langgestreckte, insbesondere starre Bandleiterelemente mit Kontakteinrichtungen zur Einkopplung und Auskopplung von elektrischem Strom, wobei die Bandleiterelemente einen Strompfad bereitstellen und die Bandleiterelemente eine Schichtanordnung mit dazwischen befindlicher elektrischer Isolierung bilden, gemäß Oberbegriff des Anspruches 1.

Es ist bekannt, bei Hochstromanwendungen in Generatoren oder bei leistungsfähigen Elektromotoren sogenannte Röbelleiter einzusetzen.

Röbelleiter bzw. Röbelstäbe bestehen üblicherweise aus mehreren Einzelleitern, die über der Leiterlänge im Verlauf einer Volltranspositionslänge (zum Begriff Volltranspositionslänge, vgl. insbesondere DE 10 2012 218 986 A1, Fig. 1 und 2, "V", sowie zugehörige Beschreibung) ihre Plätze einmal durchtauschen (so dass jeder Einzelleiter nach dem Durchtausch wieder in der ursprünglichen Lage - nur weiter fortgeschritten entlang der Länge des Röbelleiters - ist). Hierdurch wechselt jeder Teilleiter bei einer gewickelten Spule seine Position. Dies ist insbesondere im Hinblick auf eine Minimierung von Wechselstromverlusten und die Reduktion von Kopplungsverlusten von Bedeutung. Ein Röbelleiter umfasst typischerweise eine Ausdehnung von sehr vielen Volltranspositionslängen und ist durch eine große Anzahl von verröbelten Einzelleitern in der Lage, hohe Ströme zu tragen.

Beim Wickeln runder Spulen wird durch das permanente Durchtauschen der Positionen der Einzelleiter über die Leiterlänge erreicht, dass ein Leiter zeitweise innen, das heißt bei kleinerem Wickelradius, und dann wieder außen, das heißt bei größerem Wickelradius, verläuft.

Die US 2015/0114676 A1 offenbart eine Leiterschiene mit Leiterelementen, die aus mehreren dünnen, isolierten Drähten bestehen.

Die DE 39 23 310 C1 zeigt ein beispielhaftes Verfahren zur Herstellung von Röbelstäben.

Röbelstäbe sind durch Verdrillen von eckigen Profildrähten erzeugte Stäbe. Die Profildrähte können derart im Röbelwerkzeug zusammengeführt werden, dass sich Abschnitte mit unverdrillten, parallel zusammengeführten Profildrähten und Abschnitte mit verdrillten Profildrähten kontinuierlich aneinanderreihen, und dass der jeweils vorderste Strangabschnitt im unverdrillten Bereich als Röbelstab periodisch vom Strang abgetrennt wird.

Aus der DE 197 54943 A1 ist ein Doppel-Röbelstab für die Wicklung einer elektrischen Maschine bekannt. Dort sind Teilleiter in vier benachbarten Stapeln angeordnet. Je zwei benachbarte Teilleiter sind als Teilleiterpaar nebeneinander über die gesamte Länge eines Leiters geführt und dabei verdrillt. Für eine gewünschte Verdrillung sind die Teilleiter sowohl parallel als auch gekreuzt gekröpft, um eine optimale Kompensation der Quer- und Radialfelder einer im Betrieb befindlichen elektrischen Maschine zu erreichen.

Die DE 472 405 A offenbart einen Wicklungstab, der aus mehreren übereinanderliegenden Teilleitern besteht, die in einer Nut verlaufen und sich an bestimmten Stellen kreuzen.

Die CH 15177 A offenbart eine Vorrichtung zur Herstellung von miteinander verschränkten Flachleitern. In den Nuten der Ständereisen einer elektrischen Wechselstrommaschine liegen aus mehreren, miteinander verschränkten Flachleitern geschichtete Stäbe einer Spule. Freie Stabenden erstrecken sich nach dem Austritt aus der Nut axial bis zum Ansatz von Stirnverbindungen.

Die auf die Anmelderin zurückgehende WO 2022/029008 A1 bezieht sich auf ein Verfahren zur additiven Fertigung eines dreidimensionalen Bauteils mit mindestens einem elektrischen Leiter, insbesondere mit mindestens einer Leiterwicklung, vorzugsweise einer Spule, vorzugsweise eines Hair-Pins für eine elektrische Maschine, insbesondere einen Elektromotor oder Generator. Der elektrische Leiter wird durch schichtweises Aufbringen eines Aufbaumaterials und örtlich selektives Verfestigen des Aufbaumaterials durch eine Bestrahlung mit einem auf das Aufbaumaterial auftreffenden Strahl derart realisiert, dass der Leiter erste Bereiche und mindestens einen zweiten Bereich umfasst, wobei die ersten Bereiche in einem Querschnitt senkrecht auf die Längsrichtung des Leiters zumindest teilweise durch den mindestens einen zweiten Bereich getrennt sind. Der mindestens eine zweite Bereich weist eine geringere Leitfähigkeit auf als die ersten Bereiche. Durch die Bereiche mit unterschiedlicher Leitfähigkeit können auf einfache Art und Weise schon während der additiven Herstellung Strukturen erzeugt werden, die den Stromfluss positiv beeinflussen, insbesondere Wirbelstromeffekte reduzieren.

Es hat sich jedoch gezeigt, dass neben den vielen Vorteilen einer additiven Herstellung von Leiterstrukturen der Fertigungsprozess einen hohen Zeitaufwand nach sich zieht, was einer Massenproduktion bzw. einer Steigerung der Produktivität bei der Herstellung derartiger Wicklungen bzw. Spulen entgegensteht.

Aus dem Vorgenannten ist es Aufgabe der Erfindung, eine weiterentwickelte Bandleitervorrichtung anzugeben, welche ausgebildet ist, um in Wechselstrom gespeiste elektrische Maschinen, insbesondere elektrische Motoren, eingesetzt zu werden. Die Bandleitervorrichtung soll kostengünstig und mit hoher Fertigungseffektivität herstellbar sein und darüber hinaus bezogen auf den Stand der Technik weiter verbesserte elektrische Eigenschaften, insbesondere reduzierte Verluste zurückgehend auf den Skin-Effekt aufweisen und dazu beitragen, hohe Füllfaktoren zu erreichen.

Die Bandleiterelemente aufweisende Bandleitervorrichtung greift auf den Gedanken zurück, die einzelnen Bandleiterelemente separat herzustellen und mit konventionellen Verfahren, wie zum Beispiel Massivumformen oder Pressen, bearbeiten zu können, um die oben erwähnte hohe Produktivität zu gewährleisten. Die gefertigten Bandleiterelemente können dann zur Bandleitervorrichtung gefügt, je nach Bedarf abgelängt und endseitig verbunden werden.

Die Lösung der Aufgabe der Erfindung erfolgt erfindungsgemäß mit der Merkmalskombination nach Patentanspruch 1, wobei die Unteransprüche mindestens zweckmäßige Ausgestaltungen und Weiterbildungen der Erfindung darstellen.

Es wird demnach insbesondere von einer Bandleitervorrichtung ausgegangen, die ausgebildet ist, um in Wechselstrom gespeiste elektrische Maschinen, insbesondere elektrische Motoren eingesetzt zu werden.

Die Bandleitervorrichtung weist mindestens zwei langgestreckte, starre Bandleiterelemente mit Kontakteinrichtungen zur Einkopplung und Auskopplung von elektrischem Strom auf, wobei die Bandleiterelemente einen Strompfad bereitstellen.

Die Bandleiterelemente bilden eine Schichtanordnung mit dazwischen befindlicher elektrischer Isolierung.

Insbesondere separat gefertigte Bandleiterelemente können mit einer komplett umhüllenden Isolierung versehen sein und werden im Nachgang übereinandergestapelt.

Grundsätzlich erfolgt also ein Übereinanderstapeln von mindestens zwei Bandleiterelementen. Die Bandleiterelemente tauschen über ihre Leiterlänge im Verlauf einer Volltranspositionsstrecke ihre Plätze bezogen auf die Lage im Stapel, das heißt oben bzw. unten, mindestens einmal.

Dieser Lagetausch wird verdrill- und verdrehungsfrei durch komplementäre, mittels Materialumformung ausgeführter Stufensprünge der Bandleiterelemente realisiert.

Um ein kompaktes Gebilde zu realisieren, variieren im Bereich der Stufensprünge die Querschnittsflächenformen der Bandleiterelemente.

Im Bereich der Stufensprünge ist bei variierender Querschnittsflächenform der Querschnittsflächeninhalt zumindest weitgehend gleich. Der Querschnittsflächeninhalt (an mindestens einem Querschnitt, ggf. sämtlicher Querschnitte) im Bereich der Stufensprünge bzw. im Bereich von mindestens einem Stufensprung (und/oder im Bereich von mindestens einem Rücksprung bzw. als Bandleiterelement-breitseitiger Rücksprung) ist dem Querschnittsflächeninhalt der übrigen Abschnitte der Bandleiterelemente angepasst (zumindest an einem Querschnitt des Stufensprunges im Wesentlichen gleich einem Querschnittsflächeninhalt mindestens eines übrigen, ggf. sämtlicher übriger, nicht innerhalb eines Stufensprunges liegender, Abschnitte der Bandleiterelemente). Bevorzugt handelt es sich hier um eine anzustrebende hohe Gleichmäßigkeit und Konstanz der Querschnittsflächeninhalte. Durch die angestrebte konstante Ausbildung des Querschnittsflächeninhaltes werden Hotspots in der Bandleitervorrichtung vermieden oder minimiert. Die Bandleitervorrichtung ist außerdem Bestandteil einer Rechteckspule oder bildet sogenannte Hair-Pins von elektrischen Maschinen.

Darüber hinaus kann durch die geometrische Flächenform eine Frequenzanpassung im Hinblick auf die erwähnte Verwendung in Wechselstrom gespeisten elektrischen Maschinen, insbesondere Motoren, erreicht werden.

Die Stufensprünge weisen vorzugsweise jeweils komplementäre, Bandleiterelemente-breitenseitige Rücksprünge auf, welche weiter vorzugsweise im Ergebnis des Fügens des Stapels ineinandergreifen (und insbesondere so die angestrebte Kompaktanordnung schaffen).

Die Stapelanordnung der Bandleitervorrichtung umfasst vorzugsweise mindestens zwei Bandleiterelemente mit jeweils mindestens einem oder mindestens zwei Stufensprüngen, wobei die jeweiligen Enden der Bandleiterelemente elektrisch verbunden sind.

Die Stapelanordnung ist vorzugsweise hinsichtlich ihrer Abmessungen in Länge und Querschnitt an die Dimensionen von Nuten im Stator oder Kern einer elektrischen Maschine angepasst.

Die Bandleitervorrichtung kann in Ausführungsformen nur in einer Untermenge einer Anzahl von einzelnen Pins (Hair-Pins) einer Spule und/oder elektrischen Maschine vorgesehen sein (oder in sämtlichen Pins). Beispielsweise kann die Bandleitervorrichtung in mindestens 1 %, vorzugsweise mindestens 8 %, weiter vorzugsweise mindestens 25 % und/oder höchstens 90 %, vorzugsweise höchstens 70 %, weiter vorzugsweise höchstens 50 % der Pins vorgesehen sein. Dadurch können die Vorteile der Bandleitervorrichtung gezielt und dosiert genutzt werden. Vorzugsweise sind innerhalb eines jeweiligen Stators weiter innen liegende Pins mit der Bandleitervorrichtung ausgestattet, und weiter außen liegende Pins nicht.

Die Bandleiterelemente sind vorzugsweise flächig eng und/oder zumindest nahezu spaltfrei und/oder dicht sowie unter Zwischenanordnung einer dünnen Isolierschicht gestapelt.

Die Isolierschicht kann bei dem Fügen der Bandleiterelemente zur Bildung der Bandleitervorrichtung zwischen sich gegenüberliegenden Oberflächenseiten der Bandleiterelemente in einem kontinuierlichen Prozess eingebracht werden.

Dies stellt eine Alternative oder Ergänzung zur ebenfalls möglichen vollflächigen (eine Isolierschicht ausbildenden) Umhüllung der einzelnen Bandleiterelemente vor dem Fügen zur Bandleitervorrichtung dar.

Die Dicke (d1) oder (bzw.) die Schichtstärke der Isolierschicht ist um ein Vielfaches kleiner als die Dicke (d2) der Bandleiterelemente (z. B.: d1 ≤ 0,5*d2 oder d1 ≤ 0,1*d2 oder d1 ≤ 0,05*d2 und/oder d1 ≥ 0,001*d2 oder d1 ≥ 0,005*d2). Die Dicke oder die Schichtstärke der Isolierschicht kann aufgrund der geringen Potentialunterschiede zwischen den Bandleiterelementen extrem gering ausgeführt werden, so dass es zur gewünschten Kompaktausbildung der Bandleitervorrichtung mit entsprechend hohem Füllfaktor bei der angestrebten Verwendung kommt.

Die Bandleiterelemente sind beispielsweise aus einem Kupfer- oder Kupferlegierungvollmaterial und/oder aus einem Aluminium- oder Aluminiumlegierungvollmaterial bestehend und/oder mittels additiver Fertigungstechnologie hergestellt.

Die Bandleiterelemente können durch Materialumformung erzeugt werden. Beispielsweise können Vollflächenbandmaterialien mit bevorzugt rechteckigem Querschnitt verformt werden, und zwar vorzugswiese so, dass sich einer oder mehrere Stufensprünge ausbilden. Das Fügen der Bandleiterelemente zum Erhalten der Bandleitervorrichtung kann automatisiert durchführbar sein.

Eine Herstellung der Bandleitervorrichtung, insbesondere wenn sie eine Hairpin-Geometrie ausbildet oder eine solche umfasst, kann konventionell erfolgen, insbesondere ein Biegen und/oder eine Schweißen umfassen. Im allgemeinen kann es sich um ein (einfaches) Ersetzen von Hairpins mit der vorliegenden Bandleitervorrichtung handeln.

Die Bandleiterelemente der Bandleitervorrichtung sind vorzugsweise (im Querschnitt, insbesondere senkrecht auf die Längserstreckung) (zumindest außerhalb des jeweiligen Stufensprunges bzw. der jeweiligen Stufensprünge und/oder außerhalb von mindestens einem Rücksprung, insbesondere Bandleiterelementbreitseitiger Rücksprung) und/oder über zumindest 50 % oder zumindest 90 % Ihrer Länge) in (nur) einer Reihe übereinander angeordnet. Im Gegensatz z. B. zu einem Röbelstab, bei dem mindestens zwei Reihen nebeneinander angeordnet sind, kann dadurch Platz eingespart werden.

Die Bandleiterelemente der Bandleitervorrichtung sind vorzugsweise (im Querschnitt, insbesondere senkrecht auf die Längserstreckung) (zumindest außerhalb des jeweiligen Stufensprunges bzw. der jeweiligen Stufensprünge und/oder außerhalb von mindestens einem Rücksprung, insbesondere Bandleiterelement-breitseitigen Rücksprung, und/oder über zumindest 50 % oder zumindest 90 % ihrer Länge) so angeordnet, dass sie nicht nebeneinander liegen. Im Gegensatz z. B. zu einem Röbelstab, bei dem (im Querschnitt) immer mindestens zwei Reihen nebeneinander angeordnet sind, kann dadurch Platz eingespart werden.

Die Bandleiterelemente der Bandleitervorrichtung können (zumindest außerhalb des jeweiligen Stufensprunges bzw. der jeweiligen Stufensprünge und/oder außerhalb von mindestens einem Rücksprung, insbesondere Bandleiterelement-breitseitigen Rücksprung, und/oder über zumindest 50 % oder zumindest 90 % oder mindestens 95 % ihrer Länge) in dieselbe Richtung verlaufen.

Die jeweiligen Mittenlinien der Bandleiterelemente der Bandleitervorrichtung können (zumindest außerhalb des jeweiligen Stufensprunges bzw. der jeweiligen Stufensprünge und/oder außerhalb von mindestens einem Rücksprung, insbesondere Bandleiterelement-breitseitigen Rücksprung, und/oder über zumindest 50 % oder zumindest 90 % oder mindestens 95 % ihrer Länge) in einer senkrechten Projektion auf eine Unterseite einer untersten und/oder eine Oberseite einer obersten Lage (allg.: Außenseite eine äußersten Lage) identisch sein.

Die Bandleitervorrichtung und/oder der jeweilige Bandleiter kann mindestens oder genau zwei Lagen, oder mindestens oder genau drei Lagen, oder mindesten oder genau vier Lagen, aufweisen.

Die Bandleitervorrichtung und/oder der jeweilige Bandleiter kann mindestens einen oder genau einen, oder mindestens zwei oder genau zwei, oder mindestens vier oder genau vier, oder mehr Lagensprung/Lagensprünge (Stufensprung/Stufensprünge) aufweisen. Mindestens oder genau zwei Lagensprünge (Stufensprünge) können in Summe eine Transponierung in eine übernächste (oder bei entsprechend vielen Lagensprüngen/Stufensprüngen drittnächste oder noch weiter entfernte) Lage darstellen.

Ein (einzelner) Lagensprung bzw. Stufensprung kann (unmittelbar) von einer Lage zur übernächsten, oder noch weiteren Lage führen

Die Bandleitervorrichtung kann mindestens zwei oder genau zwei, oder mindestens drei oder genau drei, oder mehr Bandleiter aufweisen.

Der (jeweilige) Stufensprung (bzw. Lagensprung) ist vorzugsweise in einem jeweiligen Aktivbereich des Bandleiters bzw. der Bandleitervorrichtung vorgesehen. Generell können mindestens einer oder genau einer, oder mindestens zwei oder genau zwei, oder mindestens drei oder genau drei, oder mehr Transponierungen (Lagensprünge) im (jeweiligen) Aktivbereich einer Statornut (pro Bandleitervorrichtung) vorhanden sein.

Der (jeweilge) Stufensprung bzw. die Stufensprünge sind vorzugsweise so angeordnet, dass eine (maximale) Unterdrückung bzw. Reduktion von Wirbelstrom- und/oder Schlingstromverlusten innerhalb einer Gesamtwicklung (Gesamtkupferwicklung) erfolgt.

Vorzugsweise sind mehrere Stufensprünge innerhalb des Aktivbereichs des Stators bzw. Motors in zueinander gleichbleibenden Abständen angeordnet.

Die Bandleitervorrichtung ist als Haripin bzw. als Ersatz von (konventionellen) Hairpins und/oder innerhalb einer Profildrahtwicklung konfiguriert, insbesondere um Wirbelstromverluste innerhalb der Wicklung zu minimieren.

Ein Ausführungsbeispiel, welches nicht als Teil der beanspruchten Erfindung aufgeführt ist, kann eine Bandleitervorrichtung sein, die alternativ oder zusätzlich zu Litzendraht konfiguriert bzw. eingesetzt wird.

Die Erfindung soll nachstehend anhand eines Ausführungsbeispiels sowie unter Zuhilfenahme von Figuren näher erläutert werden.

Hierbei zeigen:
- Fig. 1: eine perspektivische Darstellung einer Bandleitervorrichtung, gefügt durch Zusammenführen von zwei erfindungsgemäßen Bandleiterelementen, die bereits mit einer umhüllenden Isolationsschicht versehen sind;
- Fig. 2: eine Seitenansicht ähnlich derjenigen nach Fig. 1, jedoch mit Einbetten einer Isolierschicht im Fügeprozess zweier Bandleiterelemente mit Stufensprüngen zur Herstellung der Bandleitervorrichtung;
- Fig. 3: eine schematische Seitenansicht einer alternativen Ausführungsform einer Bandleitervorrichtung;
- Fig. 4: eine als in U-Form (zur Ausbildung eines Hair-pin) ausgebildete Bandleitervorrichtung in einer Schrägansicht;
- Fig. 5: eine schematische Schnittansicht eines Stators mit Bandleitervorrichtungen gemäß einer Ausführungsform;
- Fig. 6: eine Darstellung analog Fig. 5 gemäß einer weiteren Ausführungsform; und
- Fig. 7: eine Darstellung analog Fig. 5 gemäß einer weiteren Ausführungsform.

Die Bandleitervorrichtung gemäß den Figuren besteht aus zwei Bandleiterelementen 1; 2, die übereinandergestapelt sind.

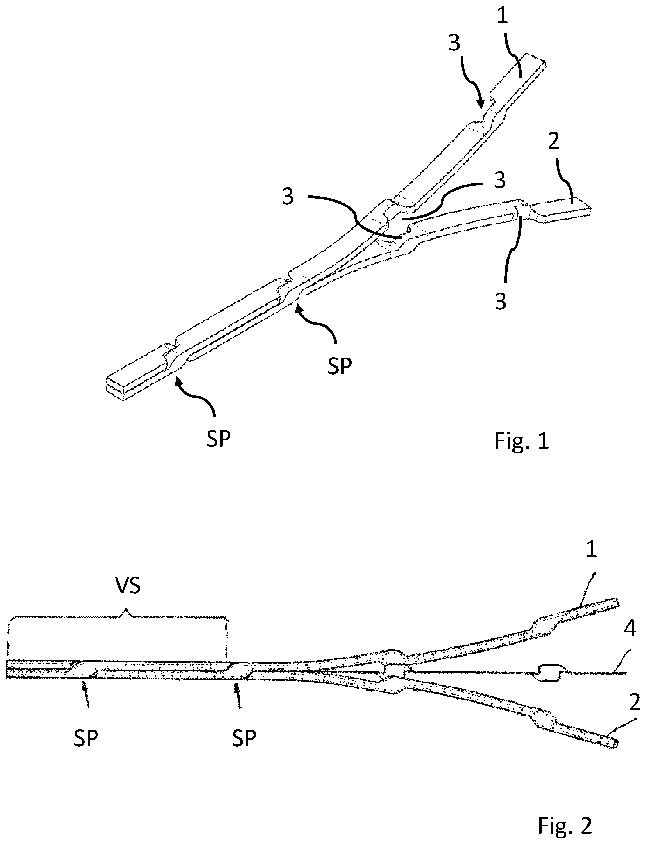

Die Bandleiterelemente 1; 2 tauschen über ihre Leiterlänge im Verlauf einer Volltranspositionsstrecke VS ihre Plätze bezogen auf die Lage im Stapel (vgl. Fig. 2, wobei VS hier schematisch angegeben ist und zu Beginn des Lagensprungs endet, der dann die Volltransposition vollendet).

Im gezeigten Beispiel befindet sich das Bandleiterelement 1 im linksseitigen Abschnitt nach Figur 1 oben und wechselt über einen Stufensprung SP seine Lage nach unten.

Umgekehrt verhält es sich mit dem Bandleiterelement (Bandleiterabschnitt) 2, das (der) seine Lage von unten über den Stufensprung SP nach oben gemäß der figürlichen Darstellung nach Figur 1 wechselt.

Aus der figürlichen Darstellung ist ersichtlich, dass der Lagetausch der Bandleiterelemente verdrill- und verdrehungsfrei durch komplementäre, mittels Materialumformung ausgeführte Stufensprünge SP der Bandleiterelemente realisiert ist.

Im Bereich der Stufensprünge SP variiert die Querschnittsflächenform der Bandleiterelemente 1; 2.

Durch Ausformung im Bereich der Stufensprünge SP gelingt es, bei variierender Querschnittsflächenform den Querschnittsflächeninhalt weitgehend gleichbleibend zu gestalten, so dass strombedingte Hotspots vermieden werden können.

Vorzugsweise entspricht ein Querschnittsflächeninhalt mindestens eines Querschnittes (ggf. sämtlicher Querschnitte) im Bereich eines (jeweiligen) Stufensprunges mindestens 0,9-mal und höchstens 1,1-mal dem Querschnittsflächeninhalt mindestens eines Querschnitts (ggf. sämtlicher Querschnitte) des jeweiligen Bandleiters außerhalb des Stufensprungs.

Vorzugsweise ist eine (minimale) Breite eines jeweiligen Bandleiters im Bereich eines (jeweiligen) Stufensprunges kleiner als eine Breite des entsprechenden Bandleiters außerhalb des Stufensprungs, vorzugsweise um mindestens 10 % oder mindestens 30 % kleiner und/oder um höchstens 80 % kleiner.

Vorzugsweise ist eine (maximale) Dicke (Höhe) eines jeweiligen Bandleiters im Bereich eines (jeweiligen) Stufensprunges größer als eine Dicke des entsprechenden Bandleiters außerhalb des Stufensprungs, vorzugsweise um mindestens 10 % oder mindestens 50 % größer und/oder um höchstens 200 % größer.

Es liegt im Sinne der Erfindung, dass der Querschnittsflächeninhalt im Bereich der Stufensprünge SP dem Querschnittsflächeninhalt der übrigen Abschnitte der Bandleiterelemente 1; 2 angepasst ist und nach Möglichkeit gleich ausgeführt wird.

Die Stufensprünge SP weisen jeweils komplementäre, Bandleiterelemente-breitenseitige Rücksprünge 3 auf, welche im Ergebnis des Fügens des Spaltes (siehe Figur 1) ineinandergreifen.

Im Ergebnis des Zusammenfügens der Bandleiterelemente 1; 2, bevorzugt mit einer maschinellen Einrichtung, ergibt sich ausgehend von einer Betrachtung der Figur 1 von rechts nach links eine Bandleitervorrichtung mit zwei Bandleiterelementen 1; 2, die flächig eng, spaltfrei und dicht gestapelt sind, so dass eine kompakte Anordnung entsteht.

Insbesondere wenn unisolierte Bandleiterelemente 1; 2 Verwendung finden, dann wird zwischen den Bandleiterelementen 1; 2 beim Vorgang des Übereinanderstapelns der Bandleiterelemente 1; 2 eine dünne Isolierschicht 4 eingebracht (siehe Figur 2).

Diese Isolierschicht 4 kann im Hinblick auf die Kontur im Bereich der Stufensprünge SP bereits vorgeformt sein oder aber auch aus einem solchen Material bestehen, das beim Zueinanderführen und Fügen der Bandleiterelemente 1; 2 deren Form im Bereich der Stufensprünge annimmt.

Die Bandleiterelemente 1; 2 können aus einem Kupfer- oder Kupferlegierungsvollmaterial bestehen, was für eine effektivere und kostengünstige Fertigung von Vorteil ist. Durch an sich bekannte, bevorzugt zur Anwendung kommende Verfahren der Materialumformung können Vollflächenbandmaterialien mit bevorzugt rechteckigem Querschnitt so verformt werden, dass sich die hier maßgeblichen Stufensprünge SP ausbilden und das Fügen der Bandleiterelemente 1; 2 zum Erhalten der Bandleitervorrichtung in einfacher Weise automatisiert durchführbar ist.

Ein wesentlicher Vorteil der vorgestellten Bandleitervorrichtung besteht aufgrund der nicht-linearen Leiterstruktur mit Stufensprung in einer Verringerung der Angriffsfläche für ein Nutquerfeld beim Einsatz der Bandleitervorrichtung in elektrischen Maschinen. Weiterhin wird die Stromverdrängung minimiert. Durch eine einfache Anpassung der Leitergeometrie kann auf ein unterschiedliches Frequenzspektrum beim Betrieb elektrischer Maschinen reagiert werden. Eine gegebenenfalls erhöhte Stromdichte im Bereich des Stufensprungs ist durch eine geometrische Anpassung und Optimierung reduzierbar.

Vergleicht man die Kupferverluste in Abhängigkeit zur Leitergeometrie ausgehend von bekannten verdrillten Leiterstrukturen mit Kupferverlusten der erfindungsgemäßen Bandleitervorrichtung, dann ist der frequenzabhängige Anstieg von Verlusten beim Einsatz einer Bandleitervorrichtung mit Stapelanordnung von Bandleiterelementen und Stufensprung, insbesondere bei höheren Frequenzen zwischen 500 und 1500, ggf. zwischen 600 und 1000 Hertz, deutlich reduziert.

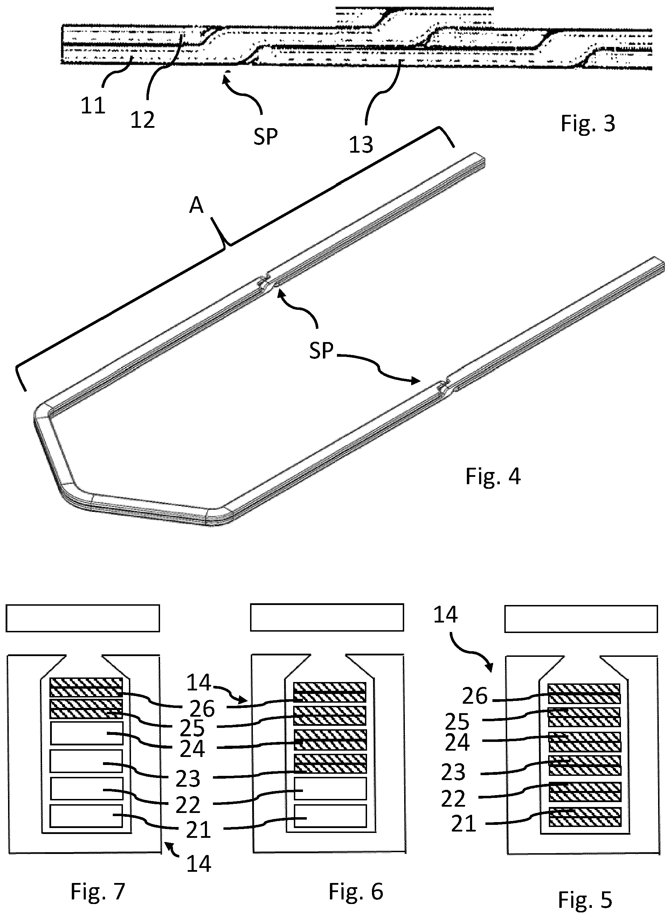

In Fig. 3 ist eine schematische Seitenansicht einer alternativen Ausführungsform einer Bandleitervorrichtung gezeigt. Die Bandleitervorrichtung umfasst Bandleiterelemente 11; 12; 13, die drei Lagen ausbilden und mehrere Stufensprünge aufweisen können (beispielsweise von einer in der Figur dargestellten untersten bzw. ersten zu einer mittleren bzw. zweiten und von dort zu einer höchsten bzw. dritten Lage).

Fig. 4 zeigt eine in U-Form (zur Ausbildung eines Hair-Pin) ausgebildete Bandleitervorrichtung. Hier ist zu erkennen, dass nur eine Transponierung (Lagensprung) im jeweiligen Aktivbereich A des Bandleiters vorgesehen ist. Generell können mindestens einer oder genau einer, oder mindestens zwei oder genau zwei, oder mindestens drei oder genau drei, oder mehr Transponierungen (Lagensprünge) im (jeweiligen) Aktivbereich einer Statornut (pro Bandleitervorrichtung) vorhanden sein.

In Fig. 5 ist eine schematische Schnittdarstellung eines Stators 14 mit einer Vielzahl von Bandleitervorrichtungen 21; 22; 23; 24; 25; und 26 (innerhalb der Statornut) ausgebildet. Auf die genaue Anzahl der Bandleitervorrichtungen kommt es hier nicht zwingend an. Es ist erkennbar, dass sämtliche Bandleitervorrichtungen nach dem Grundprinzip der vorliegenden Offenbarung (gemäß Anspruch 1) ausgebildet sind. In der abweichenden Ausführungsform gemäß Fig. 6 sind mehrere innere Bandleitervorrichtungen entsprechend dem Grundprinzip der vorliegenden Offenbarung ausgebildet (konkret vier, was nicht einschränkend sein soll) und weitere (hier konkret zwei) Bandleitervorrichtungen, die weiter außen liegen, ohne entsprechende Stufensprünge gemäß der vorliegenden Offenbarung. Im vorliegenden Fall sind konkret zwei Drittel der Bandleitervorrichtungen (was nicht einschränkend verstanden werden soll) mit Stufensprüngen gemäß der vorliegenden Offenbarung ausgebildet.

In einer nochmals abweichenden Ausführungsform gemäß Fig. 7 sind nur die inneren (bzw. innersten) zwei Bandleitervorrichtungen mit mindestens einem entsprechenden Stufensprung gemäß der vorliegenden Offenbarung ausgebildet und die äußeren (hier: vier) nicht. Nur ein Drittel (was wiederum nicht einschränkend verstanden werden soll) der Bandleitervorrichtungen ist somit mit mindestens einem Stufensprung gemäß der vorliegenden Offenbarung ausgebildet.

### Bezugszeichenliste

- 1, 2: Bandleiterelemente
- 11; 12; 13: Bandleiterelemente
- 14: Stator
- 21; 22; 23; 24; 25; 26: Bandleitervorrichtung

## Patentansprüche

1. Bandleitervorrichtung, ausgebildet um in Wechselstrom gespeiste elektrische Maschinen, insbesondere Motoren, eingesetzt zu werden, aufweisend mindestens zwei langgestreckte, starre Bandleiterelemente mit Kontakteinrichtungen zur Einkopplung und Auskopplung von elektrischem Strom, wobei die Bandleiterelemente (1; 2) einen Strompfad bereitstellen und die Bandleiterelemente (1; 2) eine Schichtanordnung mit dazwischen befindlicher elektrischer Isolierung (4) bilden,
wobei
die Bandleiterelemente (1; 2) übereinander gestapelt sind und über ihre Leiterlänge im Verlauf einer Volltranspositionsstrecke (VS), ihre Plätze bezogen auf die Lage im Stapel mindestens einmal tauschen, weiterhin der Lagetausch verdrill- und verdrehungsfrei durch komplementäre Stufensprünge (SP) der Bandleiterelemente (1; 2) realisiert ist, wobei die Stufensprünge (SP) mittels Materialumformung ausgeführt sind, **dadurch gekennzeichnet, dass**
im Bereich der Stufensprünge (SP) die Querschnittsflächenform der Bandleiterelemente (1; 2) variiert, jedoch im Bereich der Stufensprünge (SP) bei variierender Querschnittsflächenform der Querschnittsflächeninhalt gleichbleibend ist, wobei
der Querschnittsflächeninhalt im Bereich der Stufensprünge (SP) dem Querschnittsflächeninhalt der übrigen Abschnitte der Bandleiterelemente (1; 2) angepasst ist, und
die Bandleitervorrichtung Bestandteil einer Rechteckspule oder eines Hairpins ist.

2. Bandleitervorrichtung nach Anspruch 1,
**dadurch gekennzeichnet, dass**
die Stufensprünge (SP) jeweils komplementäre, Bandleiterelementebreitenseitige Rücksprünge (3) aufweisen, welche im Ergebnis des Fügens des Stapels ineinandergreifen.

3. Bandleitervorrichtung nach einem der vorangegangenen Ansprüche,
**dadurch gekennzeichnet, dass**
diese eine Stapelanordnung von mindestens zwei Bandleiterelementen (1; 2) mit jeweils mindestens einem oder mindestens zwei Stufensprüngen (SP) umfasst, wobei die jeweiligen Enden der Bandleiterelemente (1, 2) elektrisch verbunden sind.

4. Bandleitervorrichtung nach Anspruch 3,
**dadurch gekennzeichnet, dass**
die Stapelanordnung hinsichtlich ihrer Abmessungen in Länge und Querschnitt an die Dimensionen von Nuten im Stator oder Kern einer elektrischen Maschine angepasst ist.

5. Bandleitervorrichtung nach einem der vorangegangenen Ansprüche,
**dadurch gekennzeichnet, dass**
die Bandleiterelemente (1; 2) flächig eng, spaltfrei, dicht und unter Zwischenanordnung einer dünnen Isolierschicht (4) gestapelt sind und eine kompakte Anordnung bilden.

6. Bandleitervorrichtung nach Anspruch 5,
**dadurch gekennzeichnet, dass**
die Dicke oder Schichtstärke der Isolierschicht (4) um ein Vielfaches kleiner als die Dicke der Bandleiterelemente (1; 2) ist.

7. Bandleitervorrichtung nach einem der vorangegangenen Ansprüche,
**dadurch gekennzeichnet, dass**
die Bandleiterelemente (1; 2) aus einem Kupfer- oder Kupferlegierungsvollmaterial bestehen oder mittels additiver Technologie gefertigt sind.

8. Stator und/oder elektrische Maschine, umfassend mindestens eine Spule, insbesondere Rechteckspule, mit mindestens einer Bandleitervorrichtung nach einem der vorangegangenen Ansprüche.

## Claims

1. Strip conductor device, designed to be used in electric machines, in particular motors, powered by alternating current, comprising at least two elongated, rigid strip conductor elements having contact devices for coupling and decoupling electric current, wherein the strip conductor elements (1; 2) provide a current path and the strip conductor elements (1; 2) form a layered arrangement having electrical insulation (4) located therebetween,
wherein the strip conductor elements (1; 2) are arranged one on top of another and exchange their places with respect to the location in the stack at least once over their conductor length in the course of a full transposition section (VS), furthermore the location exchange is implemented without twisting and pivoting by complementary step jumps (SP) of the strip conductor elements (1; 2),
wherein the step jumps (SP) are carried out by means of material forming,
**characterized in that**
the cross-sectional area shape of the strip conductor elements (1; 2) varies in the area of the step jumps (SP), but the cross-sectional surface area is uniform in the area of the step jumps (SP) with varying cross-sectional area shape, wherein the cross-sectional surface area in the area of the step jumps (SP) is adapted to the cross-sectional surface area of the other sections of the strip conductor elements (1; 2), and
the strip conductor device is part of a rectangular coil or a hairpin.

2. Strip conductor device as claimed in claim 1,
**characterized in that**
the step jumps (SP) each have complementary recesses (3) on the strip conductor element wide side, which intermesh as a result of the joining of the stack.

3. Strip conductor device as claimed in any one of the preceding claims,
**characterized in that**
it comprises a stack arrangement of at least two strip conductor elements (1; 2) each having at least one or at least two step jumps (SP), wherein the respective ends of the strip conductor elements (1, 2) are electrically connected.

4. Strip conductor device as claimed in claim 3,
**characterized in that**
the stack arrangement is adapted with respect to its dimensions in length and cross section to the dimensions of grooves in the stator or core of an electric machine.

5. Strip conductor device as claimed in any one of the preceding claims,
**characterized in that**
the strip conductor elements (1; 2) are flatly stacked closely, without gaps, densely, and with a thin insulating layer (4) interposed and form a compact arrangement.

6. Strip conductor device as claimed in claim 5,
**characterized in that**
the thickness or layer thickness of the insulating layer (4) is multiple times less than the thickness of the strip conductor elements (1; 2).

7. Strip conductor device as claimed in any one of the preceding claims,
**characterized in that**
the strip conductor elements (1; 2) consist of a copper or copper alloy solid material or are manufactured by means of additive technology.

8. Stator and/or electric machine, comprising at least one coil, in particular a rectangular coil, having at least one strip conductor device as claimed in any one of the preceding claims.

## Revendications

1. Conducteur ruban, conçu pour être utilisé dans des machines électriques alimentées sous courant alternatif, par exemple des moteurs, comportant au moins deux éléments de conducteur ruban allongés et rigides avec des dispositifs de contact pour l'entrée et la sortie de courant électrique, dans lequel les éléments de conducteur ruban (1 ; 2) forment un trajet de circulation du courant et les éléments de conducteur ruban (1 ; 2) forment une disposition de couches avec une isolation électrique (4) intercalée,
dans lequel les éléments de conducteur ruban (1 ; 2) sont empilés les uns par-dessus les autres et changent de place au moins une fois sur leur longueur de conducteur par rapport à la position dans la pile sur la longueur d'une distance de transposition totale (VS)
et le changement de position est en outre réalisé sans vrillage ni torsion par des sauts de palier (SP) complémentaires des éléments de conducteur ruban (1 ; 2),
dans lequel les sauts de palier (SP) sont réalisés au moyen d'une déformation du matériau,
**caractérisé en ce que** la forme de l'aire de section des éléments de conducteur ruban (1 ; 2) varie au niveau des sauts de palier (SP) mais
le contenu de l'aire de section au niveau des sauts de palier (SP) reste le même quand la forme de l'aire de section change, le contenu de l'aire de section étant adapté au niveau des sauts de palier (SP) au contenu de l'aire de section des autres sections des éléments de conducteur ruban (1 ; 2), et
le conducteur ruban fait partie d'une bobine à noyau carré ou d'une bobine en U.

2. Conducteur ruban selon la revendication 1, **caractérisé en ce que** les sauts de palier (SP) présentent des saillies (3) complémentaires dans la largeur des éléments de conducteur ruban, qui se mettent en prise les unes dans les autres du fait de l'assemblage de la pile.

3. Conducteur ruban selon l'une des revendications précédentes, **caractérisé en ce qu'**il comprend une disposition empilée d'au moins deux éléments de conducteur ruban (1 ; 2) avec respectivement au moins un ou au moins deux sauts de palier (SP), les extrémités correspondantes des éléments de conducteur ruban (1, 2) étant connectées électriquement.

4. Conducteur ruban selon la revendication 3, **caractérisé en ce que** les dimensions de longueur et de section de la disposition empilée sont adaptées aux dimensions d'encoches dans le stator ou le noyau d'une machine électrique.

5. Conducteur ruban selon l'une des revendications précédentes, **caractérisé en ce que** les éléments de conducteur ruban (1 ; 2) sont empilés à plat et étroitement, sans espace, de façon étanche et en intercalant une mince couche isolante (4) et forment une disposition compacte.

6. Conducteur ruban selon la revendication 5, **caractérisé en ce que** l'épaisseur ou l'épaisseur de couche de la couche isolante (4) est plusieurs fois plus petite que l'épaisseur des éléments de conducteur ruban (1 ; 2).

7. Conducteur ruban selon l'une des revendications précédentes, **caractérisé en ce que** les éléments de conducteur ruban (1 ; 2) sont faits d'un matériau massif à base de cuivre ou d'alliage de cuivre ou sont fabriqués au moyen d'une technique d'addition de matière.

8. Stator et/ou machine électrique comprenant au moins une bobine, en particulier une bobine à noyau carré, munie d'au moins un conducteur ruban selon l'une des revendications précédentes.
